# EUROPEAN PATENT APPLICATION

(11) **EP 2 495 951 A2**
(43) Date of publication of application: **05.09.2012**
(21) Application number: 12166221.7
(22) Date of filing: 05.12.2007
(51) Int. Cl.: H04N 5/00, H04N 5/445, H04N 21/45

(54) **Systems and methods for media source selection and toggling**

(30) Priority: 06.12.2006 US 635148
(62) Divisional of application: 07862563.9
(71) Applicant: United Video Properties, Inc., Santa Clara, CA 95050 (US)
(72) Inventor: Radloff, Jon P., Castle Rock, CO 80108 (US); Day, Thomas J., Superior, CO 80027 (US)
(74) Representative: Korenberg, Alexander Tal

(57) **Abstract**

Systems and methods for switching or toggling between various media content sources are provided. One or more standard versions of a requested media asset may be automatically mapped to an enhanced version, if available within the media system. An on-screen toggle option may also be presented, allowing the user to switch back and forth between one or more alternate versions of the requested media asset quickly and easily. A user may also set viewing preferences to automatically present media assets in a specified version.

## Description

### Background of the Invention

This invention relates generally to media systems and, more particularly, to media systems supporting more than one version of media assets.

Today's media systems provide viewers with a large array of media content. Broadcast television content, pay-per-view (PPV) content, recorded content, on-demand content (e.g., video on-demand (VOD) content), and digital music may all be accessed in a viewer's home using suitable user equipment. In addition, in some cases more than one version of a particular media asset may be accessible by the user equipment.

For example, a standard-definition (SD) version and a high-definition (HD) version of the same media asset may be accessible from different content sources or on different channels at the same time. As another example, an HD version or a media asset with Dolby 5.1 audio and an HD version of the same media asset with Dolby Digital EX (or Dolby Digital Plus) may also be available in the media system at the same time. Often, however, users are unaware of the availability of one or more alternate versions of media assets that are currently being presented on the user equipment.

In addition, a user may want to easily switch or toggle between more than one version of a media asset in certain instances. For example, if an HD transmission or HD signal becomes corrupt, lossy, or jumpy (e.g., due to inclement weather in satellite systems or processing and/or decoding delays), a user may wish to switch from the HD version to the SD version of the asset in order to increase video and/or audio integrity. At some later time, when the signal integrity increases, the user may then wish to quickly switch or toggle back to the HD version. As another example, a viewer may be watching an R-rated movie when other family members enter the room, and may wish to switch to a version where the audio and/or video have been edited to create a PG-13-rated movie.

Accordingly, it would be desirable to provide user equipment that automatically presents the highest-quality version of a requested media asset that is available in the media system and supported by the user equipment device. It would also be desirable to provide an enhanced user interface for notifying a user of the availability of alternate versions of media assets and permitting efficient toggling or switching from one version to another.

### Summary of the Invention

In accordance with the principles of the present invention, an interactive media guidance application with enhanced asset selection support is provided. The enhanced video selection support may be used to switch or toggle between two or more versions of the same media asset.

As used herein, alternate versions of media assets may include the same content available in different formats, sizes, resolutions, encoding rates, compression, frame rates, video quality, audio quality, number of audio channels, editing status, or any other suitable audio or video characteristic. Although SD and HD are sometimes used as two examples of alternate versions of a media asset, it should be clearly understood that other versions may also exist. Alternate versions may include enhanced versions of higher audio quality, video quality, or both, as well as versions of lower audio quality, video quality, or both. For example, multiple HD versions each with a different Dolby digital (AC-3) version (e.g., Dolby digital (5.1), Dolby Digital EX, Dolby Digital Surround EX, and Dolby Digital Plus) or other audio format may be accessible. In addition, one or more highly-compressed versions of an asset may be available (e.g., in an AVC/H.264 format) in the media system. Alternate versions may also include versions in which the audio and/or the video have been edited. For example, commercials may have been added or removed, or objectionable scenes or dialog may have been removed or replaced.

The principles of the present invention may also be applied to versions of digital audio media assets without an associated video component. For example, multiple MP3 or other digital audio files with different bit rates (e.g., 128, 192, 256, and 320 kbps) and sampling frequencies (e.g., 32, 44.1, 48, 128, and 192 kHz) may be available in a media system. These digital audio files may be classified with different quality designations (e.g., average, good, better, best), and users may switch or toggle efficiently between two or more of these versions.

In some embodiments, the standard source (e.g., the SD source) of a media asset is automatically mapped to the enhanced source (e.g., the HD source), if an enhanced source is available in the media systems and supported by the user equipment device. Enhanced sources may include any sources of higher-quality video and/or audio. After receiving a user request for an asset, the interactive media guidance application may determine if the user is an enhanced tier customer. If the user is an enhanced tier customer and an enhanced version of the requested asset is available in the media system, the enhanced content source may be located. A version mapping table may then be updated to reflect the new version mapping. The standard source may be automatically mapped to the enhanced source for future access requests.

In order to facilitate source switching or toggling (these terms are used interchangeably herein), in some embodiments, a user-selectable version toggle option is presented in, for example, a flip or browse bar, information screen, transparent overlay, or window. The version toggle options allows the user to efficiently switch or toggle between one or more alternate versions of a media asset without knowing the channel number or source the alternate version or versions are accessible on. The version toggle option may be overlaid on the media asset in some embodiments and presented in any suitable location on the display screen. After a user's selection of the version toggle option, an alternate source of the media asset currently being presented is accessed and presented to the user. In some embodiments, after a user's selection of the version toggle option, the user equipment performs a stealth tune, whereby the display channel is not changed, but the call letters for the source or channel may be updated (e.g., from HBOHD to HBO or vice versa), and the new source is presented. The user-selectable version toggle option may also change to reflect that the alternate source is now being presented.

In order to toggle back and forth between alternate versions of the asset, the user may select the user-selectable option one or more times. After each selection, the appropriate source is tuned and presented to the user. If multiple alternate versions are available in the media system, the version toggle option may cycle through the available versions in a round-robin manner in some embodiments.

To facilitate seamless source toggling, one or more real-time buffers may be maintained on the user equipment in some embodiments. After determining that one or more alternate versions of the requested media asset are available in the media system, the real-time buffer may buffer one or more of these alternate versions. For example, after requesting a media asset in SD, a 30-minute buffer of both the HD and H.264 versions of the same media asset may be maintained behind, ahead, or both behind and ahead of the current viewing position. In some embodiments, the version toggle option or alternate version notification may not be displayed to the user until a sufficient amount (e.g., enough to begin decoding) of one or more of the alternate versions are buffered on the user equipment. In this way, after a user's selection of the version toggle option, the new version may be presented almost immediately without waiting to receive enough of the new version of the media asset to decode.

In some embodiments, a user profile may be created and stored to the user equipment or other location. The user profile may include various version viewing preferences. For example, the user may indicate in the user's profile that certain assets should always be presented in a particular version or format (e.g., always in HD, SD, or AVC/H.264-encoded format) if available in the media system. The user may designate media assets by title, genre, time, channel, media type, or any other suitable criterion (or combination of criteria). For example, the user may desire to always watch sports content after 5:00 PM in HD and always watch news content in SD. By making the appropriate selections in the user's profile, content in the sports or news genres (as determined, e.g., from media guidance application data) will be presented in the specified version or format, if available.

### Brief Description of the Drawings

The above and other features of the present invention, its nature and various advantages will be more apparent upon consideration of the following detailed description, taken in conjunction with the accompanying drawings, and in which:

FIG. 1 is a diagram of an illustrative interactive media system in accordance with one embodiment of the present invention;

FIG. 2 is a diagram of illustrative version buffers in accordance with one embodiment of the present invention;

FIG. 3 is an illustrative source mapping table in accordance with one embodiment of the present invention;

FIGS. 4 and 5 show illustrative display screens with enhanced source selection options in accordance with embodiments of the present invention;

FIG. 6 shows another embodiment of an illustrative display screen with an enhanced source selection option in accordance with one embodiment of the present invention;

FIG. 7 shows an illustrative display screen with a source selection toggle option in accordance with one embodiment of the present invention;

FIG. 8 shows an illustrative viewing profile display screen in accordance with one embodiment of the present invention;

FIG. 9 shows an illustrative process for automatically accessing an alternate version of an asset in accordance with one embodiment of the present invention.

FIG. 10 shows an illustrative process for toggling sources using a source selection option in accordance with one embodiment of the present invention; and

FIG. 11 shows an illustrative process for updating the version mapping table in accordance with one embodiment of the present invention.

### Detailed Description of the Preferred Embodiments

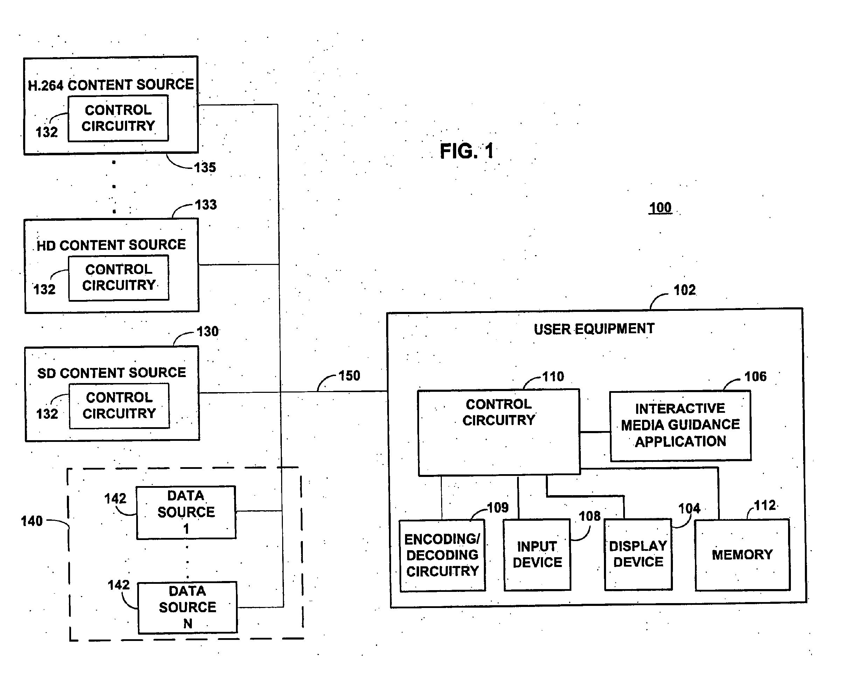

FIG. 1 shows illustrative interactive media system 100 in accordance with one embodiment of the invention. User equipment device 102 receives content in the form of signals from content sources 130, 133, and 135 over communications path 150. Any suitable number of users may have user equipment, such as user equipment device 102, coupled to content sources 130, 133, and 135 and data sources 140, and a single user may have multiple user equipment devices. For the clarity of the figure, however, a single user equipment of only a single user is shown.

Content sources 130, 133, and 135 may include any suitable content sources such as, for example, cable system headends, satellite television distribution facilities, television broadcast facilities, on-demand servers (e.g., video-on-demand ("VOD") servers), in-home media hubs, Internet or network media/web servers, or any other suitable facilities or systems for originating or distributing passive or interactive media content to user equipment device 102. Media assets that may be provided by content sources 130, 133, and 135 to user equipment device 102 includes broadcast programs, broadcast series, VOD programs, digital music, news, interactive applications (e.g., interactive games), Internet resources and web services (e.g., websites, newsgroups, and chat rooms), and any other media assets capable of being displayed by, presented to, recorded, or interacted with, using user equipment device 102.

The content sources available in media system may include one or more of SD content source 130, HD content source 133, and H.264 content source 135. Although these content sources are shown as separate elements in media system 100, in actual implementations these content sources may be integrated into a single content source. Other content sources may also be defined in media system 100. For example, HD content with various Dolby digital audio versions may be available as part of HD content source 133 or as one or more separate content sources. Edited content may also be included as part of any or all of the sources.

Some or all of the content available on SD content source 130 may also be available on HD content source 133, H.264 content source 135, or both HD content source 133 and H.264 content source 135. For example, some content may be available in all three formats whereas other content may be available in only SD, HD, or H.264 format.

In some embodiments, some instances of user equipment device 102 may have different capabilities. The user equipment devices may be configured to display different types of content and run different types of software on different platforms. For example, instances of user equipment device 102 may include set-top boxes, media servers, personal computers, and various mobile communications devices, such as cellular telephones and PDAs. Each of these user equipment devices may have a different bandwidth capability for receiving data. For example, a wireless user equipment device may receive data at a lower data rate than a user equipment device connected to a content or data source via a wired (e.g., cable) path. In addition, a wireless device may not be configured to display HD content, while other user equipment devices may have HD decoders and display support. In some embodiments, a user equipment device may automatically select to only present content that is compatible with the requesting user equipment device.

Content sources 130, 133, and 135 may be configured to transmit signals to user equipment device 102 over any suitable communications path 150 including, for example, a satellite path, a fiber-optic path, a cable path, or any other suitable wired or wireless path. Although in the example of FIG. 1 only communications path 150 is shown, in actual implementations, numerous communications paths may connect user equipment device 102 and content sources 130, 133, and 135. The signals may be transmitted as a broadcast, multicast, unicast, or any other suitable transmission stream. Content sources 130, 133, and 135 may also include control circuitry 132 for performing operations on the signals transmitted by the content sources such as, for example, generating new signals or communicating with user equipment device 102 to provide on-demand content.

User equipment device 102 may receive interactive application data from one or more instances of data sources 140. Data sources 140 may provide data for a particular type of content or for a particular application running on user equipment device 102. For example, one data source 142 may provide data for an interactive media guidance application and another data source 142 may provide data for an interactive home shopping application. In some embodiments, data sources 140 may provide data to the applications running on user equipment device 102 using a client-server model. There may be one server per data source, one server for all sources, or, in some embodiments, a single server may communicate as a proxy between user equipment device 102 and various data sources 140.

Content sources 130, 133, and 135 and data sources 140 are shown in FIG. 1 as separate elements. In practice, their functionality may be combined into a single mechanism and provided from a single system at a single facility, or their functionality may be provided by multiple systems at multiple facilities. For example, one or more of content source 130, 133, and 135 and data source 142 may be combined to provide broadcast television content and associated broadcast television data, including ratings information, program data, genre information, or other suitable information to user equipment device 102.

User equipment device 102 may include any equipment suitable for providing an interactive media experience. For example, user equipment device 102 may include computer equipment, such as a personal computer with a television card (PCTV). User equipment device 102 may also include television equipment such as a television and set-top box, a recording device, a video player, a user input device (e.g., remote control, a keyboard, a mouse, a touch pad, a touch screen, and/or a voice recognition/verification module) or any other device suitable for providing a complete, interactive experience. For example, user equipment 102 may include a DCT 2000, 2500, 5100, 6208 or 6412 set-top box provided by Motorola, Inc. User equipment device 102 may also include various mobile communications devices with integrated or attached displays, such as PDAs, laptop computers, cellular telephones, audio players, such as iPODs, and the like.

In the example of FIG. 1, user equipment device 102 includes at least control circuitry 110, display device 104, interactive media guidance application 106, memory 112, user input device 108, and encoding/decoding circuitry 109, all of which may be implemented as separate devices or as a single, integrated device. In addition to interactive media guidance application 106, other interactive applications may be implemented on user equipment device 102. These interactive applications may direct one or more digital or analog tuners in control circuitry 110 to display, on display device 104, the content transmitted by content source 130 over communications path 150 and to provide interactive application features. One digital tuner may receive only HD content while another digital tuner may receive only SD content, or a single digital tuner may receive all forms of digital content.

Control circuitry 110 may direct one or more tuners to acquire a content signal in response to some user input from input device 108. Decoding/encoding circuitry 109 may include MPEG (e.g., MPEG-2 or MPEG-4) decoding/encoding circuitry, compression/decompression circuitry, and transcoding circuitry. Decoding/encoding circuitry 109 may be capable of encoding and/or decoding HD content received from HD content source 133, SD content received from SD content source 130, and/or H.264 content received from H.264 content source 135. Although decoding/encoding circuitry 109 is shown in the example of FIG. 1 as a separate element in user equipment device 102, in actual implementations decoding/encoding circuitry 109 may be integrated with control circuitry 110.

Display device 104 may be any suitable device capable of presenting human-perceivable media, such as, for example, a television monitor, computer monitor, LCD or plasma display, video projection device, holographic projector, virtual reality simulator, etc. Display device 104 may also be configured to provide audio and other sensory output. In some embodiments, display device 104 may also provide input to control circuitry 110 (e.g., a capacitive, resistive, or surface wave touch screen display).

Control circuitry 110 is adapted to receive user input from input device 108 (and optionally display device 104), execute the instructions of interactive media guidance application 106, execute the instructions of any other interactive applications, and direct display device 104 to display media content and interactive application display screens and overlays. Control circuitry 110 may include one or more tuners (e.g., analog or digital tuners), encoders and decoders (e.g., MPEG encoders and decoders), processors (e.g., Motorola 68000 family processors), communications circuitry (e.g., cable modem and ATSC 256QAM receiver circuitry), input/output circuitry (e.g., graphics circuitry), connections to the various devices of user equipment 102 (e.g., memory 112), and any other suitable components for providing analog or digital media content, including television programming, interactive media applications and games, digital music, and other interactive features. Control circuitry 110 may be configured to execute the instructions of interactive media guidance application 106 from memory 112, which can include any type of storage or memory mechanism (e.g., RAM, ROM, flash memory, hybrid types of memory, hard disks, and/or optical drives). In one embodiment, control circuitry 110 may be included as part of one of the devices of user equipment 102 such as, for example, part of display 104 or any other device (e.g., a set-top box, television, and/or video player).

Memory 112 may also include one or more recording devices for storing data and assets from data sources 140 or content sources 130, 133, and 135. The recording devices may include any media storage or recording device, including a digital video recorder (DVR), file system, or gaming system. The data and assets stored on the recording device may include data for use by interactive media guidance application 106 (e.g., media content information, or any other suitable information) as well as any media assets capable of being presented with user equipment device 102.

Although, in the illustrated embodiment of FIG. 1, interactive media guidance application 106 is internal to user equipment device 102, interactive media guidance application 106 may be implemented externally or partially implemented externally to user equipment device 102. For example, interactive media guidance application 106 may be implemented at content source 130, 133, or 135 and may run using a client-server or distributed architecture where some of the application is implemented locally on user equipment device 102 in the form of a client process and some of the application is implemented at a remote location in the form of a server process. Interactive media guidance application 106 may also be implemented on any suitable server, computer equipment, or set-top box accessible by user equipment device 102. In some embodiments, interactive media guidance application 106 is integrated with another interactive application or is implemented as a standalone application, subprocess, or class (e.g., in an OCAP environment).

In at least some embodiments, interactive media guidance application 106 is implemented in software. However, an implementation of software and/or hardware may be used in other embodiments. These arrangements are merely illustrative. Other suitable techniques for implementing interactive media guidance application 106 may be used if desired.

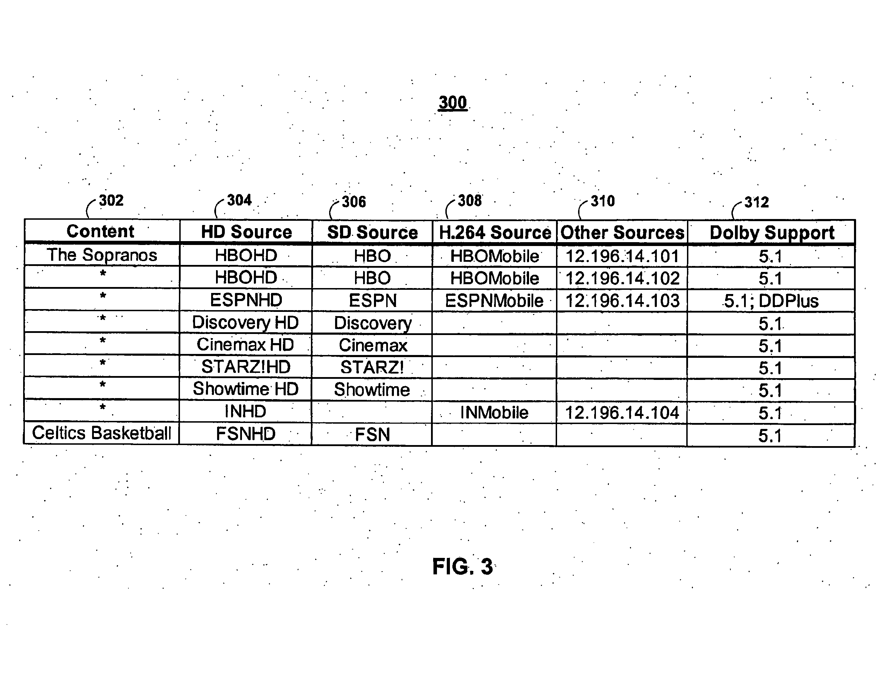

Interactive media guidance application 106 may maintain a table of source mappings in memory 112. The table may be generated locally by the media guidance application or downloaded from a remote server, content, or data source. This table of source mappings may associate standard versions of content (e.g., SD versions) with their enhanced (e.g., HD) equivalents, if available in media system 100 (e.g., from content source 130, 133, or 135 or memory 112). The table of source mappings may also identify alternate sources of available content, such as H.264 and HD versions of content with various Dolby digital sound versions. In some embodiments, the table of source mappings may also include source or channel identifiers for the available sources, as shown in FIG. 3, described below. Interactive media guidance application 106 may access this table of source mappings to select an alternate version of a requested asset, based on user input or preferences, bandwidth considerations, the capabilities of user equipment 102, or any other suitable criteria.

For example, if network bandwidth is limited or highly-utilized, interactive media guidance application 106 may select an available SD source in lieu of the requested HD source. As another example, if a user requests a media asset in a format that is not supported by the requesting user equipment device (e.g., an HD asset when the user equipment device does not support HD decoding), interactive media guidance application 106 may automatically present the supported SD equivalent of the requested asset, if one is available in media system 100.

As previously mentioned, a media system may often have multiple versions of a media asset available within the system. For example, separate SD and HD channels may be provided for local channels, premium channels, sports channels, and other content. Sometimes corresponding SD/HD channel pairs may be grouped together in the local channel map on adjacent channel numbers. Other times, all SD channels may be grouped together in a first range, and all HD channels may be grouped together in some second range. Therefore, it may not be readily apparent to a user that an alternate version or versions of a media asset are available in the media system.

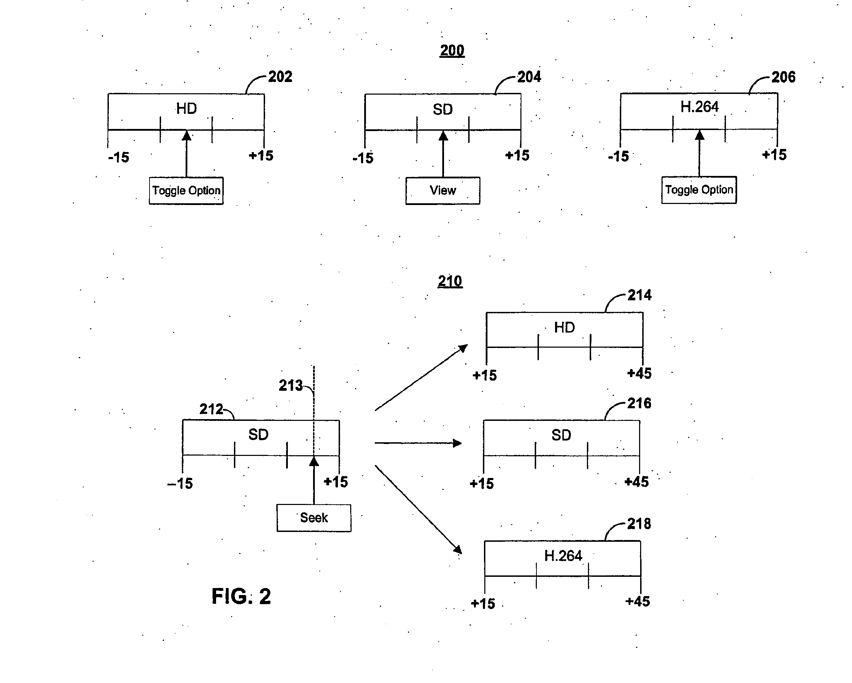

FIG. 2 shows illustrative real-time buffer sets 200 and 210. After a user request to access a media asset is received, user equipment device 102 (FIG. 1) may maintain a real-time buffer of the requested asset and one or more real-time buffers of alternate versions of the requested asset. For example, buffer 204 may contain a 30-minute window of buffered content. The content buffered in buffer 204 may correspond to the SD version of the requested asset (e.g., the version of the asset actually requested by the user). Buffers 202 and 206 may also be maintained on the user equipment device. Buffer 202 may buffer 30 minutes of the requested asset in HD (if available in the media system). Buffer 206 may buffer 30 minutes of the requested asset in H.264 format (if available in the media system).

The user equipment may buffer alternate versions of the requested content to facilitate seamless source switching or toggling between the alternate versions. As described in more detail below, a user may desire to switch from one version of media content to another version of the same media content (e.g., from an HD version to an SD version, if the HD source becomes corrupt or lossy). By maintaining real-time buffers of alternate versions of the media asset, the user equipment may more quickly present an alternate version of the asset without processing or decoding delays often associated with channel changing. The user equipment may also enable the user to manipulate the video (e.g., rewind or fast-forward) regardless of which version is being viewed. All or part of the aforementioned buffers may be pre-decoded, if desired.

Although, in the depicted embodiment, buffers 202, 204, and 206 maintain 30 minutes of buffered content, buffers 202, 204, and 206 may buffer any suitable amount or duration of content. In addition, the content buffered may be ahead, behind, or, as in the depicted embodiment, ahead and behind the user's current viewing position. As the user's current viewing position changes, buffers 202, 204, and 206 may automatically buffer more content to maintain a window centered around the viewing position. Although the depicted embodiment maintains three real-time buffers corresponding to three available versions of the requested media content, more or fewer buffers may be used in other embodiments. All of the aforementioned buffers may be maintained at the local user equipment device or at a server or content source (e.g., content source 130, 133, and/or 135 of FIG. 1) remote from the user equipment device. If one or more of the buffers are stored remote from the user equipment device, the user equipment device may access the buffers over any suitable communications path.

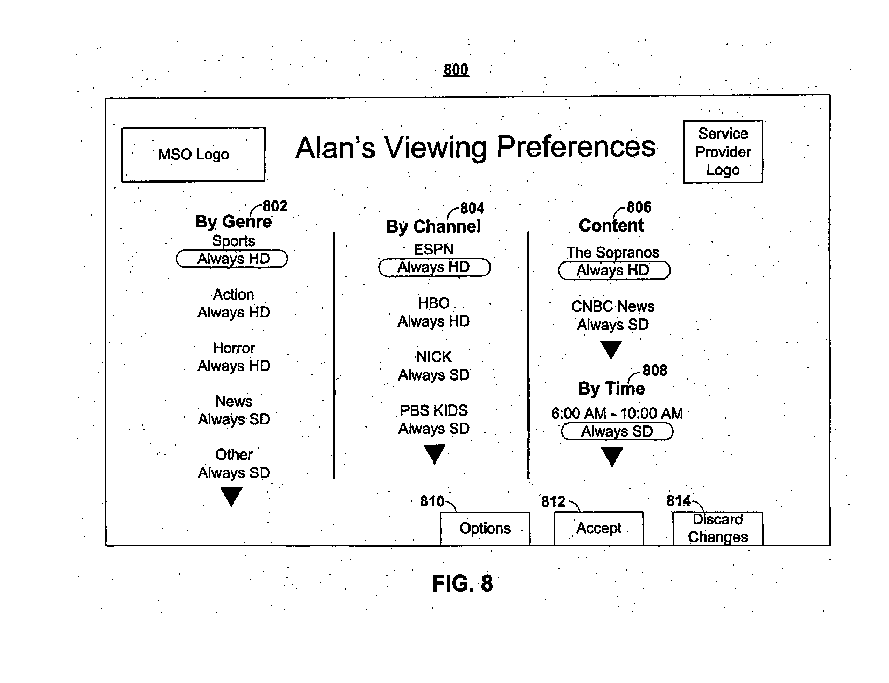

Buffer set 210 shows an alternate or additional buffer set that may be used in some embodiments. Buffer set 210, like buffer set 200, may support real-time seek commands (e.g., fast-forward and rewind) using buffer 212. For example, if the user is currently watching a media asset in SD, SD buffer 212 may be used for seek commands, allowing a user to seek through the version of the media asset currently being presented on the user equipment device. Instead of maintaining a centered buffered windows as in buffer set 200, once the user seeks past a certain point in buffer 212, e.g., position 213, the user equipment device may fetch more content to buffer in buffers 214, 216, and 218. The content buffered in buffers 214, 216, and 218 may correspond to the currently accessed media content in HD, SD, and H.264 format, respectively. Buffers 214, 216, and 218 may be used to allow the user to continue seeking in the same direction without delay (or with reduced delay). After the seek command is stopped, the user may then switch or toggle between buffered sources without processing or decoding delays. Although the depicted embodiment maintains three real-time buffers corresponding to three available versions of the requested media content, more or fewer buffers may be used in other embodiments, corresponding to more or fewer alternate versions of the media asset. Buffers may be used for any suitable type of alternate version, including edited versions. The versions selected for buffering may be derived from user history, user activity (e.g., active user monitoring), or user profile information, as described in more detail below in regard to FIG. 8. In some embodiments, all the alternate versions available in the media system and supported by the user equipment device are buffered.

FIG. 3 shows illustrative source mapping table 300. Table 300 may be stored at the user equipment (e.g., in memory 112 of FIG. 1). Interactive media guidance application 106 may read from table 300 to determine if an alternate version or format of requested media content is available in the media system. The content listed in content column 302 may include specific programming content, identified by unique identifier or name. Content column 302 may also include a wildcard character, which is used to designate all content available from the corresponding source or sources.

Each content entry in table 300 may be associated with one or more entries in HD source column 304, SD source column 306, H.264 source column 308, and other sources column 310. A list of available Dolby digital versions may also be included in table 300 in Dolby support column 312. When a user requests a media asset from a particular source (e.g., The Sopranos on HBO), interactive media guidance application 106 (FIG. 1) may look up the content or the source of the content in source mapping table 300. For example, looking up "The Sopranos" in content column 302 or "HBO" in SD source column 306 would reveal that this program is available from an HD source (i.e., HBOHD) and an H.264 source (i.e., HBOMobile). The content is also available in other sources from the network addresses listed in other sources column 310. Other sources column 310 may include network sources, such as streaming Internet sources. Different formats of the same content may be available from different types of sources. For example, the SD version of a program may be available from a broadcast television channel, the HD version may be available from a video-on-demand server, and the H.264 version may be available from an Internet feed. The format of the source table shown in FIG. 3 is merely illustrative. Other arrangements may be used. Support for other video and audio formats or other types of alternate versions, including edited versions, may be included if desired.

As described above, in some embodiments, after a user request for the media content, interactive media guidance application 106 (FIG. 1) automatically presents the requested content in the highest-quality version available in the media system. For example, if a user requests "The Sopranos" in SD from HBO, the user may be automatically presented with "The Sopranos" in HD from HBOHD, if the user equipment supports HD programming. In other embodiments, content is not automatically presented in the highest-quality version available, but instead a notification is presented to the user that the content is available in one or more alternate versions. In still other embodiments, content is automatically presented in the highest-quality versions supported by the requesting user equipment and a notification is presented to the user that one or more alternate versions are available in the media system, as described in more detail below.

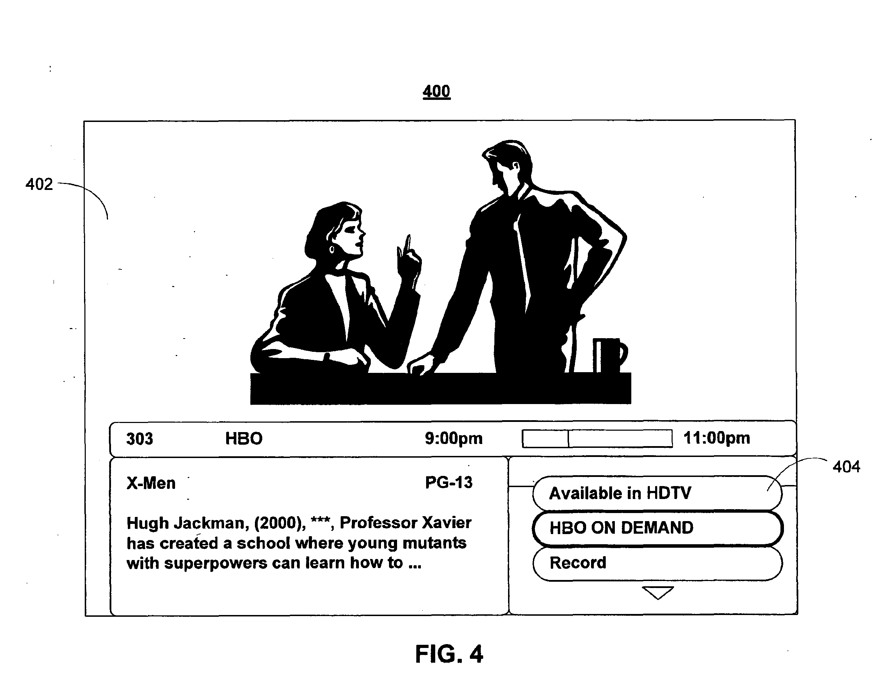

For example, FIG. 4 shows illustrative display screen 400. The user is watching programming in SD on channel "303 HBO" in area 402. Upon tuning to this channel, a flip bar or information region may be presented on the screen. This flip bar or information region may include the name of the content, its rating, its source, a brief description or summary, as well as alternate version notification 404. The flip bar may be presented until the user presses an appropriate key or button on input device 108 (FIG. 1), or the flip bar may automatically timeout after a predetermined number of seconds. Alternate version notification 404 may be presented after a user tunes to a channel presenting programming with one or more alternate versions available. Alternatively or additionally, version notification 404 may be presented after the user requests more information about the program currently being displayed in area 402 by pressing an "Info" button (or other suitable button) on input device 108 (FIG. 1). Although in the example of FIG. 4, alternate version notification 404 informs the user that the content is available in HD, additional version notifications similar to alternate version notification 404 may inform the user of other available versions of the media asset currently being presented in area 402, if available in the media system. For example, an HD and H.264 version may both be available, in which case two version notifications may be presented in the flip bar area. As another example, if a version is available that has been edited for content, the version notification may show the program parental rating (e.g., R or PG).

In addition to or instead of the version notification appearing in a flip bar area, the notification may appear in area 402 itself. For example, version notification 404 may appear in any corner of area 402, on an information overlay, on a full-screen information screen, in an interactive application screen (e.g., interactive media guidance application screen), or any other suitable location.

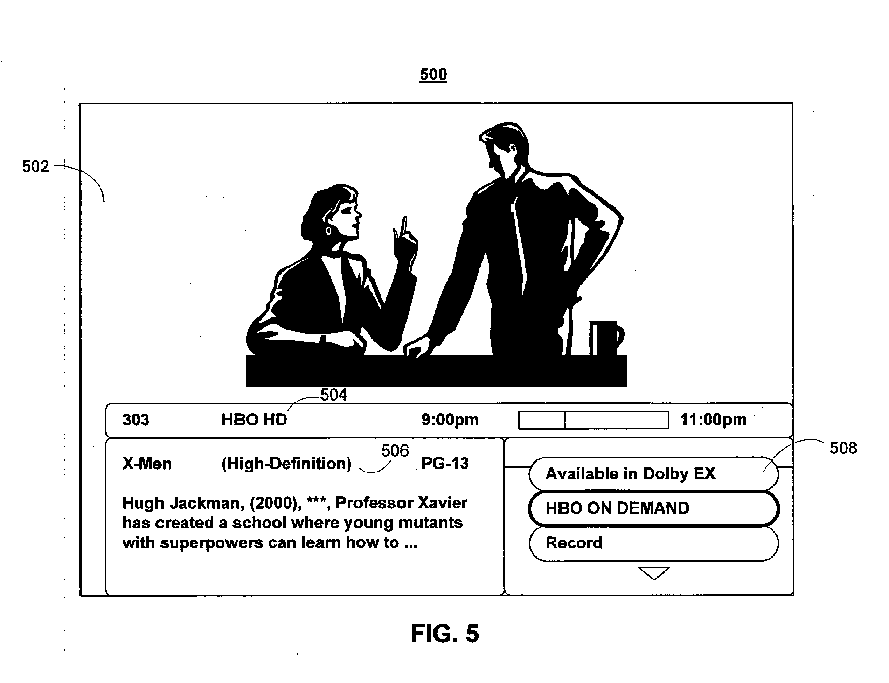

In some embodiments, the version notifications may be interactive or selectable by a user. For example, a user may select alternate version notification 404 to be presented with the HD version of the movie "X-Men," as shown in display screen 500 of FIG. 5. In some embodiments, after selecting alternate version notification 404, a real-time buffer is created for the HD version of the asset. The SD version may continue to be presented until a sufficient amount of the HD version has been received for decoding. Only after the HD version has been decoded (and is ready for presentation) does the control circuitry present the HD version. In this way, source switching or toggling in accordance with the present invention is streamlined to minimize decoding delays (and black or blank screens) often associated with channel switching.

In addition to presenting the content in HD in area 502, the interactive media guidance application may also update the call name and/or channel number for the HD content. For example, in the example of FIG. 5, call name 504 has been changed to "HBOHD." One or more additional indications that the content being presented is in HD may also be displayed. For example, label 506 may inform the user that the content being presented in area 502 is HD content.

In some embodiments, HD content may be available with different digital sound characteristics. For example, the HD movie "X-Men" shown in FIG. 5 may be available in Dolby 5.1, Dolby Digital Plus, DTS-ES, and several other suitable home theater or digital audio formats. These available formats may be listed in one or more version notifications, such as version notification 508, if the user equipment supports the versions. Each of these version notifications may be selected by a user. After selecting a version notification, the user may be tuned directly to the selected version of the asset.

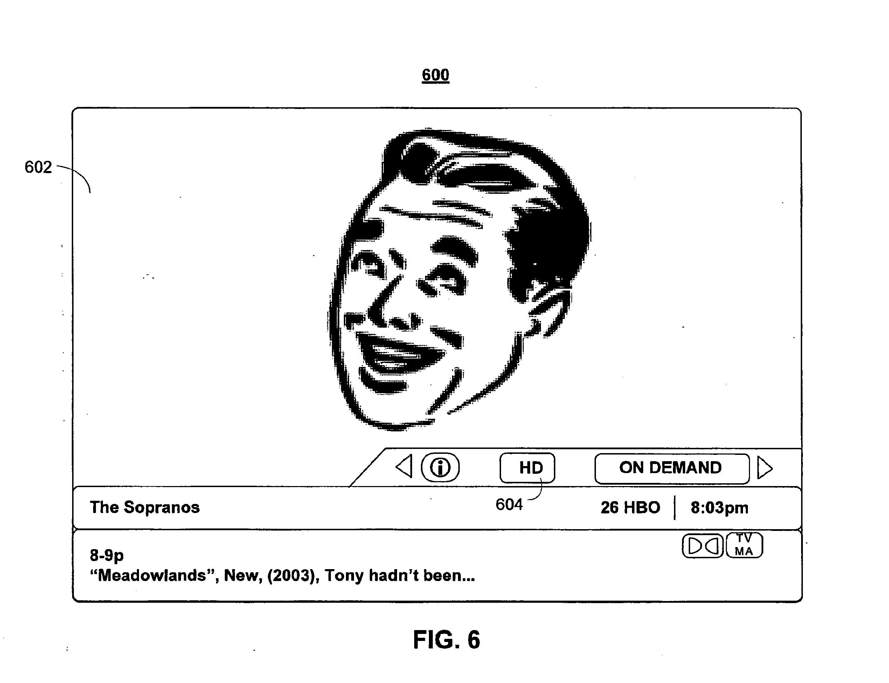

FIG. 6 shows illustrative display screen 600 presenting SD content in area 602. At the top of the flip bar, an action row of selectable icons is presented to the user. One of the selectable icons is "HD" icon 604, indicating that the content currently being presented is available in HD. If the user desires to view the content in HD, the user may select icon 604. After selecting icon 604, the interactive media guidance application may select the HD content source and present the content in HD.

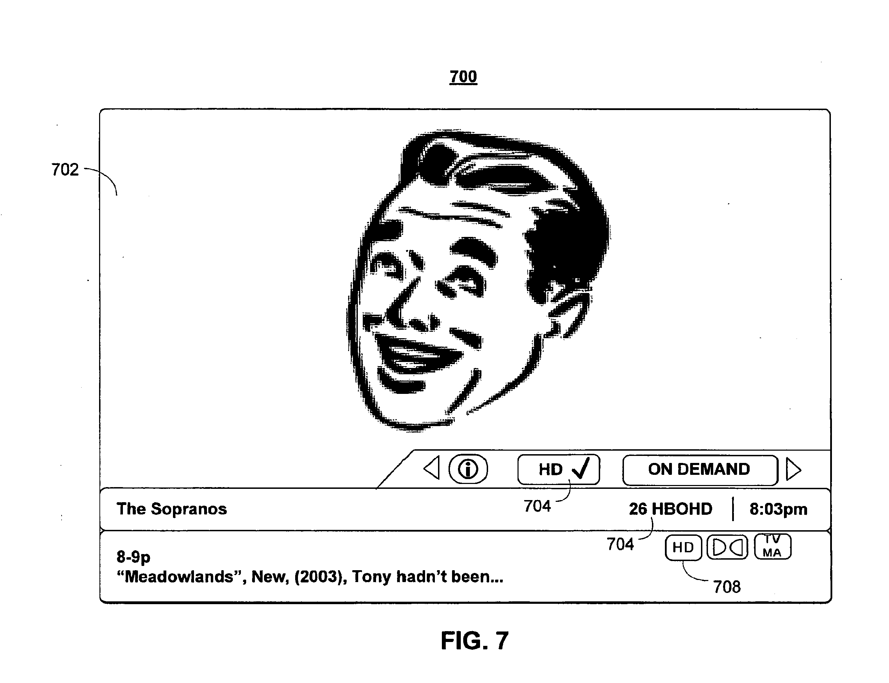

After selecting icon 604, the user may be presented with display screen 700 of FIG. 7. Display screen 700 presents the same content presented in area 602 of FIG. 6 in HD in area 702. A check mark (or other suitable indicator) may reflect the change in presentation in "HD" icon 704. In addition, channel call name 704 may be updated and HD identifying logo 708 may be displayed. In this example, the interactive media guidance application has performed a "stealth tune." The channel number displayed to the user has not changed, even though a tune may have taken place in order to access the alternate content version. In some embodiments, the call letters may also remain the same when a stealth tune is performed.

The interactive media guidance application may also maintain a user profile of viewing preferences in some embodiments. The user profile may be derived from direct user input (e.g., a user changing the default settings). Additionally or alternatively, a user's viewing profile may be automatically adjusted based on active user monitoring. For example, the interactive media guidance application may execute an application process that monitors all user interaction with the user equipment. This application process may monitor such user interactions as the amount of time spent on a given channel, the number and types (e.g., genres) of programs viewed in SD, the number and types (e.g., genres) of programs viewed in HD, the number and types (e.g., genres) of programs viewed in H.264, the ratings of programs watched, parental controls in place, and any other suitable interaction with the user equipment of the interactive media guidance application. Based on the active user monitoring, the interactive media guidance application may automatically create or update the user's viewing preferences in the user's profile.

For example viewing preferences display screen 800 of FIG. 8 may include default selections derived from user behavior. A user may change these default selections in viewing preferences display screen 800 to customize the selections, if desired. For example, the user may press a "Profiles" button on input device 108 (FIG. 1) at any time to be presented with viewing preferences display screen 800.

In some embodiments, the user may set viewing preferences based on any suitable criterion (or combination of criteria). Some common criteria are shown in FIG. 8. For example, to set viewing preferences by genre, the user may select any available genre in genre listing 802. In this way, the user may customize the presentation of media content based on the content's genre classification. The genre classification may be derived from any suitable source, such as media guidance application data delivered from one or more data sources (such as data source 140 of FIG. 1).

Below each genre, the user is presented with several viewing options. These viewing options may include such presentation options as "Always HD," "Always SD," "Always H.264," "Always HD/Dolby 5.1," "Always HD/Dolby 6.1," "Always HD/Dolby EX," "Always HD/Dolby Digital Plus," and "Best Available." Other suitable options may also be presented based on the availability of other versions of media content in the media system. Other suitable options may include, for example, "Unedited," "Edited for Families," and "Commercial Free." After a user has saved the preferences displayed in display screen 800 by selecting accept button 812, the interactive media guidance application may create or update the user's profile to reflect the selections in display screen 800. This profile information may then be used to automatically present the desired versions of media content based on the genre of the media content. For example, as shown in the example of FIG. 8, all sports, action, and horror genre content will be presented in HD (if available), while news and any other genre content is presented in SD. More or fewer genres than those shown in FIG. 8 may also be defined.

Similarly, a user may select to have all content on a particular channel (or from a particular source) be presented in a certain version or format.
As shown in channel listing 804, some frequently watched channels are listed with viewing options. These options may include the same viewing options available under genre listing 802 (e.g., always HD, always SD, always H.264). More or fewer channels than those shown in FIG. 8 may be presented in channel listing 804 by selecting options button 810. In some embodiments, the list of channels may automatically include all channels that offer multiple formats and automatically exclude all channels that only offer a single format.

The user may also select specific programming (e.g., all episodes of "The Sopranos") for presentation in a particular version or format (if available). The user may add or remove content from content listing 806 by selecting options button 810. The viewing options for content may include the same viewing options available under genre listing 802 (e.g., always HD, always SD, always H.264). In some embodiments, specific programs may be added to the list by the user when the programs are encountered in the context of an interactive application, such as an interactive media guidance application. For example, the user may access a program information screen for a specific program found in a program listing screen of an interactive media guidance application, and the program information screen may include an option to specify a viewing preference for the program, its channel, or its genre.

Finally, the user may also set up viewing preferences for certain times of the day (e.g., 6:00 AM - 10:00 AM), certain days of the week (e.g., Saturday and Sunday), certain months of the year (e.g., basketball season), or any other convenient temporal criteria. In some embodiments, time criteria may be specified in combination with genres, channels or specific programs. The viewing options for temporal criteria may include the same viewing options available under genre listing 802 (e.g., always HD, always SD, always H.264, and family friendly).

To save the selections displayed in display screen 800, the user may select accept button 812. After selecting accept button 812, the user's profile may be created (if a profile does not already exist for the user) or updated accordingly. To discard all changes, the user may select discard button 814.

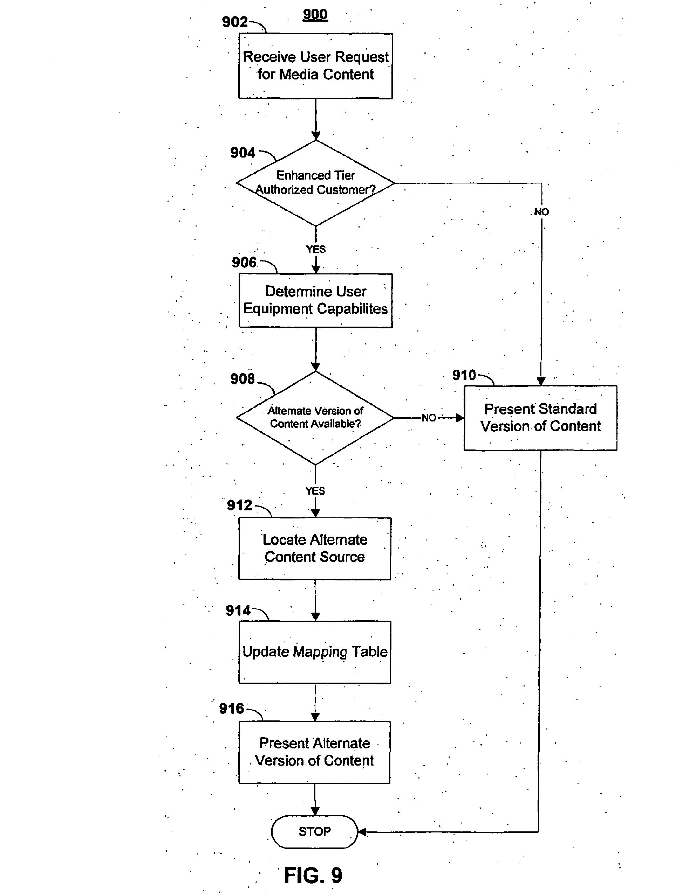

FIG. 9 shows illustrative process 900 for selecting an alternate content source and presenting an alternate version of a requested media asset. As previously mentioned, in some embodiments, interactive media guidance application 106 (FIG. 1) automatically maps all standard content (e.g., SD content) to their enhanced equivalents (e.g., HD content), if available within media system 100 (FIG. 1). Although HD content is one example of an alternate version of content, others alternate versions may also exist.

At step 902 a user request for media content is received. For example, a user may tune to a particular channel or content using input device 108 (e.g., a remote control). At step 904, the interactive media guidance application may determine if the user is an enhanced tier customer at step 904. For example, the user may be required to pay an additional fee or have a user equipment device with an authorized network identifier. This authorized network identifier may indicate what versions or formats of media content the user equipment is capable of presenting. For example, some user equipment devices may include decoding/encoding circuitry 216 (FIG. 2) that includes HD decoding/encoding support. Other user equipment devices may not support presentation of HD content.

If the user is not an enhanced tier customer, the requested content may be presented to the user in standard format at step 910. For example, control circuitry 110 (FIG. 1) may direct a tuner to acquire and present, on display device 104 (FIG. 1), the requested content in SD. However, if the user is an enhanced tier customer, the capabilities of the requesting user equipment may be determined at step 906. As previously discussed, since user equipment devices may take the form of many devices running many different platforms, the capabilities of user equipment devices may vary considerably. For example, cellular telephones and other mobile devices may support only highly-compressed, low data rate or frame rate video. As another example, some set-top boxes may support HD programming while others may not. To determine the user equipment capabilities, the model or version of the user equipment device may be read at step 906.

After determining the capabilities of the requesting user equipment device at step 906, the interactive media guidance application next determines, at step 908, whether one or more alternate versions of the requested content is available in media system 100 (FIG. 1). For example, mapping table 300 (FIG. 3) may be consulted to determine if an alternate version of the requested content exists in the media system. The alternate version may be available on its own channel or source (e.g., a premium HD channel) or may be available via an on-demand or pay-per-view service. A query may also be sent to a content source or data source (such as content source 130, 133, or 135 or data sources 140 of FIG. 1) in order to determine if one or more alternate versions of the requested content exist within media system 100 (FIG. 1).

If an alternate version is not available at step 908, the requested content may be presented in its standard version at step 910. If an alternate version is available at step 908, the interactive media guidance application may locate the alternate content at step 912. For example, the source or channel the alternate version is located on may be read from mapping table 300 (FIG. 3). Additionally or alternatively, a network query of data sources or a content source may be executed in order to determine the source of the alternate content, particularly if the alternate content is available on a channel or source not listed in the local channel map.

After locating the alternate source, a source mapping table (e.g., table 300 of FIG. 3) may be updated to reflect the location or source of the alternate version. For example, the user equipment may update table 300 (FIG. 3) to include a new entry for each alternate version of the content available in the media system. This way, if a user subsequently attempts to access the standard version of the requested content again, then the media guidance application may automatically present the alternate version, based on user preferences. Finally, at step 916, the alternate version of the requested content is presented to the user.

In practice, one or more steps shown in illustrative process 900 may be combined with other steps, performed in any suitable order, performed in parallel (e.g., simultaneously or substantially simultaneously) or removed. For example, in some embodiments, the standard version may not be automatically mapped to the enhanced version for subsequent access requests at step 914. Rather, in some embodiments, the user may access the standard version on subsequent on subsequent access requests. After accessing the standard version, a notification may be presented to the user, as indicated in illustrative process 1000 below.

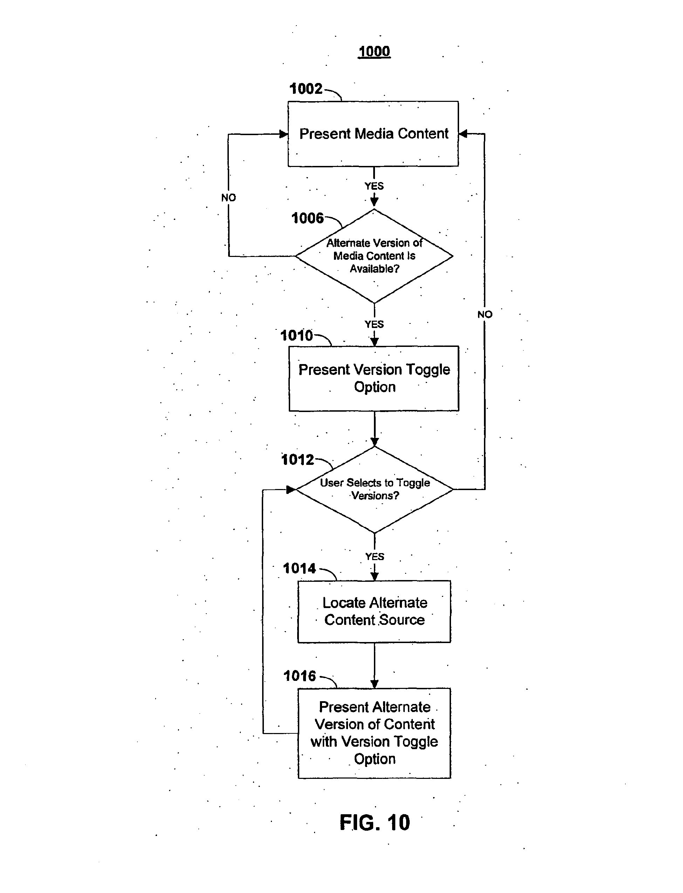

FIG. 10 shows illustrative process 1000 for presenting a version notification or version toggle option to a user. At step 1002, media content may be presented to the user. At step 1006, the interactive media guidance application may determine if one or more alternate versions of the media content currently being presented is available in the media system. For example, mapping table 300 (FIG. 3) may be consulted to determine if an alternate version of the requested content exists in the media system. The media guidance application may also execute a query of one or more content sources (e.g., content sources 130, 133, 135 of FIG. 1) to determine if any alternate versions exist in the media system. The alternate versions may include one or more enhanced versions (e.g., if a standard version is currently being presented) or a standard versions (e.g., if an enhanced version is currently being presented). In some embodiments, alternate versions may be ignored if the user equipment does not support them.

If, at step 1006, an alternate version is not available in the media system, the media content may continue to be presented at step 1002. If, at step 1006, the alternate version is available in the media system, a version toggle option or version notification may be presented to the user at step 1010. For example, the information flip bar in FIGS. 4-7 may be presented to the user. The version toggle option may be presented at any suitable location in the main programming screen or window, on an overlay (e.g., a transparent overlay), or in a separate window. If the user wishes to switch or toggle versions, the user may select the version toggle option at step 1012. If the user does not select the version toggle option, the media content presented at step 1002 may continue to be presented.

After the user selects the version toggle option at step 1012, the alternate content source may be located at step 1014. For example, the source or channel the alternate version is located on may be read from mapping table 300 (FIG. 3). Additionally or alternatively, a network query of a data source or content source may be executed in order to determine the source of the alternate version, particularly if the alternate version is available on a channel or source not listed in the local channel map. Finally, at step 1016, the alternate version is presented to the user with a version toggle option. For example version notification 704 (FIG. 7) may be presented in a flip or status bar or information region of the display screen. The user may then select the version toggle option to switch or toggle versions again, if desired.

Although illustrative process 1000 refers to an alternate version, in some embodiments multiple alternate versions may be available. For example, an SD, HD, H.264, and several HD versions with different Dolby digital sound versions may all be available. The versions notification or version toggle option may permit a user to select one version from all such versions available in the media system, or separate version toggle options may be provided for each alternate version.

In practice, one or more steps shown in illustrative process 1000 may be combined with other steps, performed in any suitable order, performed in parallel (e.g., simultaneously or substantially simultaneously) or removed.

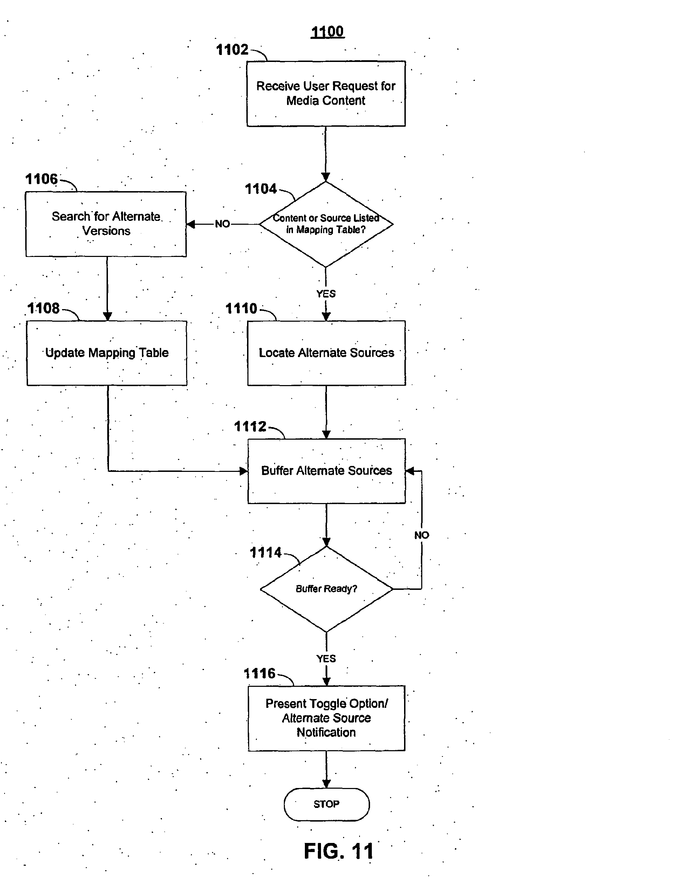

FIG. 11 shows illustrative process 1100 for buffering one or more alternate versions of a media asset. At step 1102, a user request to access a media asset is received. For example, the user may select a listing from a media guidance application schedule grid guide. At step 1104, the media guidance application may determine if the requested content is listed in a source mapping table (e.g., source mapping table 300 of FIG. 3). If the content is listed in the source mapping table, one or more alternate sources may be located at step 1110. For example, table 300 (FIG. 3) may list the channel number, call name, source identifier, or network address of one or more alternate versions of the requested content.

If, at step 1104, the media guidance application determines that the requested content is not listed in a source mapping table, at step 1106 the media guidance application may search for alternate versions accessible by the user equipment device. For example, a query of content sources 130, 133, and 135 (FIG. 1) may be executed to discover alternate versions of the requested media content. The results of the search may be updated in the mapping table at step 1108. For example, one or more new entries may be created (or existing entries modified) in mapping table 300 (FIG. 3).

After updating the mapping table at step 1108 or locating alternate sources at step 1110, one or more of the alternate source may be buffered in one or more real-time buffers, like the buffers shown in FIG. 2. For example, a HD and H.264 version of the requested content may be buffered. At step 1114, the media guidance application determines if the buffer or buffers are ready. For example, the user equipment may buffer enough of an MPEG-2 or MPEG-4 stream to permit immediate decoding. After the buffer or buffers are ready, a version toggle option or alternate source notification may be presented to the user at step 1116. For example, the information flip bar in FIGS. 4-7 may be presented to the user. The version toggle option or version notification may be presented at any suitable location in the main programming screen or window, on an overlay (e.g., a transparent overlay), or in a separate window.

In practice, one or more steps shown in illustrative process 1100 may be combined with other steps, performed in any suitable order, performed in parallel (e.g., simultaneously or substantially simultaneously) or removed.

The above described embodiments of the present invention are presented for purposes of illustration and not of limitation, and the present invention is limited only by the claims which follow.
The following items are disclosed:
1. A method for presenting media assets on a user equipment device, the method comprising:
   receiving a user request for a media asset;
   determining if the requested media asset is available in at least one alternate version, wherein the alternate version is not the requested version; and
   presenting the requested media asset with an onscreen version toggle option in response to determining that the requested media asset is available in the at least one alternate version, wherein the on-screen version toggle option is selectable by a user.
2. The method of item 1 further comprising:
   receiving an indication of a user selection of the on-screen version toggle option; and
   in response to receiving the indication, presenting one of the at least one alternate version.
3. The method of item 1 wherein the at least one alternate version is selected from the group consisting of a standard-definition version, a high- definition version, a high-definition version with Dolby digital sound, an H.264 version, an unedited version, an edited for children version, and an edited for advertisements version.
4. The method of item 1 wherein determining if the requested media asset is available in at least one alternate version comprises reading a source mapping table stored on the user equipment device.
5. The method of item 1 wherein determining if the requested media asset is available in at least one alternate version comprises querying a content or data source remote from the user equipment device.
6. The method of item 1 further comprising determining whether the user equipment device supports the at least one alternate version.
7. The method of item 1 wherein presenting the requested media asset with the on-screen version toggle option comprises presenting the on-screen version toggle option in an information region of a display screen.
8. The method of item 1 wherein presenting the requested media asset with the on-screen version toggle option comprises presenting the on-screen version toggle option on top of the requested asset.
9. The method of item 1 wherein presenting the requested media asset with the on-screen version toggle option comprises presenting the on-screen version toggle option in an overlay.
10. The method of item 1 wherein the requested media asset is selected from the group consisting of broadcast television programming, recorded programming, on-demand programming, pay-per-view programming, and digital music.
11. The method of item 1 further comprising buffering at least one of the at least one alternate version on the user equipment device.
12. The method of item 2 further comprising buffering at least one of the at least one alternate version in response to receiving the indication.
13. A system for presenting media assets on a user equipment device, the system comprising:
   a user input device; and control circuitry configured to:
      receive, from the user input device, a user request for a media asset;
      determine if the requested media asset is available in at least one alternate version,
         wherein the alternate version is not the requested version,- and present the requested media asset with an onscreen version toggle option in response to determining that the requested media asset is available in the at least one alternate version, wherein the on-screen version toggle option is selectable by a user.
14. The system of item 13 wherein the control circuitry is further configured to: receive, from the user input device, an indication of a user selection of the on-screen version toggle option; and in response to receiving the indication, present one of the at least one alternate version.
15. The system of item 13 wherein the at least one alternate version is selected from the group consisting of a standard-definition version, a high- definition version, a high-definition version with Dolby digital sound, an H.264 version, an unedited version, an edited for children version, and an edited for advertisements version.
16. The system of item 13 wherein the control circuitry is configured to determine if the requested media asset is available in at least one alternate version by looking up the requested asset in a source mapping table.
17. The system of item 13 wherein the control circuitry is configured to determine if the requested media asset is available in at least one alternate version by querying a content or data source remote from the user equipment device.
18. The system of item 13 further wherein the control circuitry is further configured to determine whether the user equipment device supports the at least one alternate version.
19. The system of item 13 wherein the control circuitry is configured to present the requested media asset with the on-screen version toggle option by presenting the on-screen version toggle option in an information region of a display screen.
20. The system of item 13 wherein the control circuitry is configured to present the requested media asset with the on-screen version toggle option by presenting the on-screen version toggle option on top of the requested asset.
21. The system of item 13 wherein the control circuitry is configured to present the requested media asset with the on-screen version toggle option by presenting the on-screen version toggle option in an overlay.
22. The system of item 13 wherein the requested media asset is selected from the group consisting of broadcast television programming, recorded programming, on-demand programming, pay-per-view programming, and digital music.
23. The system of item 13 further wherein the control circuitry is further configured to buffer at least one of the at least one alternate version on the user equipment device.
24. The system of item 14 wherein the control circuitry is further configured to buffer at least one of the at least one alternate version in response to receiving the indication.

## Claims

1. A method for presenting media assets on a user equipment device, the method comprising:
receiving a user request for a media asset;
determining if the requested media asset is available in at least one alternate version from a first source, wherein the alternate version is not the requested version;
determining whether the user equipment device supports the first source;
if the requested media asset is available in at least one alternate version from a first source supported by the user equipment device, presenting the at least one alternate version in response to determining that the requested media asset is available in at least one alternate version from a first source supported by the user equipment device; and
if the requested media asset is not available in at least one alternate version from a first source supported by the user equipment device, presenting the requested media asset in response to determining that the requested media asset is not available in at least one alternate version from a first source supported by the user equipment device.

2. The method of claim 1, in response to determining that the user equipment device supports the first source, further comprising:
presenting the requested media asset with an on-screen version toggle option, wherein the on-screen version toggle option is selectable by a user;
buffering at least one of the at least one alternate version on the user equipment device; and
receiving an indication of a user selection of the on-screen version toggle option.

3. The method of claim 1, wherein the alternate version is a version of the requested content preferred by the user, wherein the preferred version is determined by checking a user profile stored on the user equipment device.

4. The method of claim 2, wherein the presenting the requested media asset further comprises:
displaying the on-screen version toggle option selectable by the user, wherein the option corresponds to the alternate version of the content; and
receiving a selection of the displayed option.

5. The method of claim 4, wherein the on-screen version toggle option is displayed in an overlay.

6. The method of claim 1, wherein determining if the requested content is available in the alternate version comprises reading a source mapping table stored on the user equipment device.

7. The method of claim 1, wherein determining if the requested content is available in the alternate version comprises querying a content or data source remote from the user equipment device.

8. A system for presenting media assets on a user equipment device, the system comprising control circuitry configured to:
receive a user request for a media asset;
determine if the requested media asset is available in at least one alternate version from a first source, wherein the alternate version is not the requested version;
determine whether the user equipment device supports the first source;
if the requested media asset is available in at least one alternate version from a first source supported by the user equipment device, present the at least one alternate version in response to determining that the requested media asset is available in at least one alternate version from a first source supported by the user equipment device; and
if the requested media asset is not available in at least one alternate version from a first source supported by the user equipment device, present the requested media asset in response to determining that the requested media asset is not available in at least one alternate version from a first source supported by the user equipment device.

9. The system of claim 8, wherein in response to determining that the user equipment device supports the first source, the control circuitry is further configured to:
present the requested media asset with an on-screen version toggle option, wherein the on-screen version toggle option is selectable by a user;
buffer at least one of the at least one alternate version on the user equipment device; and
receive an indication of a user selection of the on-screen version toggle option.

10. The system of claim 8, wherein the alternate version is a version of the requested content preferred by the user, wherein the preferred version is determined by checking a user profile stored on the user equipment device.

11. The system of claim 9, wherein the presenting the requested media asset further comprises:
displaying the on-screen version toggle option selectable by the user, wherein the option corresponds to the alternate version of the content; and
receiving a selection of the displayed option.

12. The system of claim 11, wherein the on-screen version toggle option is displayed in an information region of a display screen.

13. The system of claim 11, wherein the on-screen version toggle option is displayed in an overlay.

14. The system of claim 8, wherein determining if the requested content is available in the alternate version comprises reading a source mapping table stored on the user equipment device.

15. The system of claim 8, wherein determining if the requested content is available in the alternate version comprises querying a content or data source remote from the user equipment device.
